# EUROPEAN PATENT SPECIFICATION

(11) **EP 1 488 709 B1**
(45) Date of publication and mention of the grant of the patent: **03.08.2005**
(21) Application number: 03743397.6
(22) Date of filing: 26.02.2003
(51) Int. Cl.: A23N 12/08

(54) **IMPROVED DEHYDRATION SYSTEM COMPRISING A REVOLVING SCREEN**
VERBESSERTES ENTWÄSSERUNGSSYSTEM MIT DREHSIEB
SYSTEME AMELIORE DE DESHYDRATATION EN TROMMEL ROTATIF

(30) Priority: 01.03.2002 ES 200200502
(43) Date of publication of application: 22.12.2004
(73) Proprietor: Agro Pirineos Ayerbe, S.L., Yéqueda (Huesca) (ES)
(72) Inventor: AYERBE PEJON, Juan, José, Yéqueda (Huesca) (ES); AYERBE PEJON, Rafael, Yéqueda (Huesca) (ES)
(74) Representative: Schäfer, Matthias W., Dipl.-Ing.
(86) International application number: PCT/ES2003/000091
(87) International publication number: WO 2003/073874

(56) References cited:
- ES-A- 2 014 609
- ES-A- 2 127 051
- ES-A- 2 177 359
- ES-U- 1 033 784
- ES-U- 1 046 567

## Description

The present descriptive memory refers, as its title indicates, to an improved dehydration system comprising a revolving screen, of the type used to dehydrate or dry different types of agricultural products, like alfalfa, any kind of fodder, pulps, cereal and agricultural or urban waste, with the main purpose of improving the conservation of those products since they are harvested or produced until they are consumed or used.

Currently known dehydration systems with revolving screens use a revolving screen or tube where the product that has to be dehydrated is introduced at one end, usually by means of a feed hopper. The revolving motion of the screen, usually generated by means of external driving wheels, together with the internal blades or ribs turn the product as it moves lengthways along the screen. Hot air is also introduced into the screen at the same end as the product. The hot air comes from a gas burner (e.g. natural gas, propane or similar) or an oil burner (e.g. diesel fuel). This air circulates through the screen because a powerful fan situated at the exit sucks it. The movement of the product combined with the circulation of hot air along the screen and the internal labyrinth structure that slows the product make it possible to dehydrate it, transferring the moisture from the product to the hot air. At the exit of the screen, a sluice stops most of the product, specially medium-sized and large fibres, in order to separate it from the hot air current, and from there it arrives at the exit tank by means of pipes and feed augers. Such a system is known from e.g. BS-2014609. Optionally, the product can go through any type of cooling system in order to lower its temperature. The hot air is sucked through the screen together with some airborne product, mainly small and very small fibres. Therefore, the hot air has to go through a cyclone or decantation labyrinth with a large sluice where the product is separated from the air in order to incorporate it to the next process. Finally, the fan situated at the exit, used to suck the air during the circulation process, expels all that air out of the system, usually through a ventilating stack.

This type of dehydration system with revolving screen has been successfully used with short fibre agricultural products, or when the product's fibre is broken into smaller sections in order to process it adequately in this type of system. But the cattle sector, main consumer of this kind of dehydrated agricultural products, such as alfalfa and similar, now requires a better quality product, with whole or long green fibres, dehydrated as efficiently and quickly as possible so that the said fibre has the highest possible protein content.
Attempts to carry out this type of process with the current systems have revealed several problems and disadvantages.

The main problem of this type of dehydration system with revolving screen is caused by the structure of the revolving screen itself. The most common types, such as one-step, two-step or three-step systems, present quite a few problems when it comes to dehydrating long green fibre agricultural products. One-step screens do not dehydrate the product effectively, because the product goes through them too quickly. Slightly more complex screens, such as two-step and three-step ones, improve the dehydration process by means of internal labyrinths created with the internal ribs and blades, thus slowing the movement of the product through the screen and dehydrating it more efficiently. The problem is that long fibre products get frequently stuck and there is a danger of starting a fire due to the high temperatures generated by the hot air and the fact that the screen is clogged. Consequently, the screen has to be shut down frequently so that the staff in charge can unblock it, which slows down the process and increases labour costs.

Another important disadvantage is that at the exit of the screen the product must go through a separation sluice, as explained before, which is another point where the product gets frequently stuck and maintenance problems occur. The pipes and feed augers used to extract the hot product also cause quite a few problems.

Also, the need for a high degree of dehydration in the fibre requires the hot air used in the process to be at very high temperatures, around 700 °C. In order to reach those temperatures it is necessary to use high performance gas or oil burners, which consume a lot of energy to heat the air from room temperature to the desired temperature. This high consumption increases the cost of the dehydration process and therefore the price of the final product. It has the additional disadvantage of generating high levels of air pollution. This means that complex filtering systems have to be installed in the chimneys, and this increases the cost of the installation.

Another disadvantage is that the hot air current has to be sucked from the screen's exit. Due to the length of the screen, a lot of pressure is lost, which means that a very powerful fan is required to compensate the loss of hot air flow and to move the air with enough energy to prevent the product from getting stuck due to the length of the fibre.

To solve the problems currently affecting this type of systems used to process agricultural products, the improved dehydration system comprising a revolving screen that is the subject of the present invention has been developed. It includes several fundamental innovations that combined solve all the problems and disadvantages of the systems currently used to process long fibre products, and also improve enormously the energy efficiency of the whole system, which in turn means lower costs.

The first innovation is a drying screen perfected with a system of internal mutiturn blades that turn and stir the product more, so that it mixes better with the hot air and the dehydration is improved without it getting stuck or forming obstacles that slow it down. Therefore, the product flows easily and continuously, regardless of the length of the fibre. This way, the product does not get stuck and the system does not break down when processing long fibre products. Therefore the process is improved and maintenance costs are lower.
Another important innovation is the incorporation of a decantation unit at the exit of the screen, which replaces the separating sluice in the conventional systems. The product falls by gravity from this box onto the exit conveyor and is thus separated from the hot air without any kind of mechanism that might limit the size of the processed product. This way, another source of constant breakdowns and bottlenecks is eliminated and long fibre products can be easily separated.

A great improvement over conventional processes is the incorporation of a mixed hot air generator that basically has a preheating stage, based on the combustion of solid fuels (biomasses or similar), followed by an air propelling fan, and a second heating stage at high temperatures based on a gas (natural gas, propane, etc.) or liquid (e.g. diesel fuel) burner, or otherwise, resistors or heat exchangers that generate electric power. The first stage heats the air, raising its temperature to about 350 °C, by means of a solid fuel furnace where biomasses (agricultural waste such as almond shells, etc.) or other kind of low cost solid fuels are burned. The air at 350 °C is then propelled by means of a fan into the second stage, where its temperature is raised using burners, resistors or heat exchangers to more than 700 °C, which is the temperature required to dehydrated the product properly in the screen.

This kind of mixed hot air generator has an important advantage: the fuels that are burned in the furnace during the preheating stage, such as biomasses and other farming or industrial waste, are very low cost fuels. This is a low cost and environmentally friendly contribution to waste disposal. This obviously reduces significantly the cost of the process, also because during the second stage, which uses more expensive fuels, the product is already heated and the temperature difference, in this case between 350 °C and 700 °C, is smaller than with conventional generators, and therefore less fuel is required.

Finally, it is important to mention the advantages of using two fans, one between the two hot air generating stages that propels the air and another one at the exit that sucks it out. These two fans improve the performance of the system because the flow speed of the hot air through the dehydration screen is higher, and the product dries faster and better. Also, the fan at the exit of the screen does not need to be so powerful and therefore the installation costs and the energy consumed for its operation are lower.

To better understand the subject of the present invention, the preferred optimal assembly is represented in the annexed plan. In this plan, figure -1- shows a lateral view of the present invention.

The drying process starts with a feeding system (1) where the wet product is placed. The product is moved up by a conveyor (2) that consists of a conveyor belt, feed auger or similar and into the inlet (3) of the revolving screen (4). The amount of product that goes in can be controlled by adjusting the speed of the conveyor and the thickness of the product layer changing the height of a roll (5). The product falls into the screen's inlet (3) through a large pipe, preventing blockages.

The wet product and the hot air from the mixed furnace (6) enter the screen (4) through a pipe (7) that is insulated in order to prevent the loss of heat and has the inlet (3) at the top.
The hot air generator (6) has two stages. The first one preheats the air in a chamber (8) using a solid fuel burner with its own fuel feeding system (9), made of a feed hopper and a feed auger or similar. At the exit there is an ash and particles decanter (10), fitted with thermal insulation, and a fan (11) that propels the preheated air. Next, the second heating stage takes place in another chamber (12) where there is a high performance burner, preferably an "air vein" type gas burner, although it can be of other types of fuel or even electrical, like an air-to-air heat exchanger.

The drying system being put forward is a perfected one-step multiturn revolving screen (4) where the product forms curtains as it falls from the revolving blades and is thus exposed to the airflow. There are a three very different types of internal revolving blades: some are longitudinal and flat, and they turn the product instantly when they exceed 45°; others are longer and they have a fold, retarding the unloading of the product and filling a different sector of the trammel; and finally there are radial blades, longer and fitted with a retention system that stop the product and generate the air turbulences that prevent the air from flowing through a preferential path.
The screen (4) has treads (13) that allow it to turn on top of several wheels or bearings, one of which, at least, is a driving one (14). All this rests on top of beds or mountings (15) tightly anchored to a bedplate.
At the exit of the screen (4) there is a decantation unit (16) attached to the reception hopper (17) followed by a conveyor (18) that takes the dry product out of the screen (4).
The lighter particles that are carried by the air will be collected in a cyclone (19) or cyclonic separator that works in depression and separates the dust and fine dry product from the air. In order to do that, it is fitted with a revolving valve (20) at the bottom, and an indraught pipe connects it to the indraught fan (21).
The revolving valve (20) extracts the fine product that can then be incorporated to the long fibre product or kept apart for a different kind of treatment.

The exit conveyor (18) that carries the dry product also allows the fibre to cool down. Once the dry fibre has fallen from the decantation unit (16) at the beginning of the conveyor and as soon as it starts going up, it is subjected to a flow of cold air generated by a refrigerating unit (23) that lowers its temperature. At the exit of the conveyor we obtain the dry long fibre product, that can optionally be fed into a packing press (22).

All the air that has been generated, both for drying (25) and for cooling down (26) the product, is sucked by a fan (21) situated at the end of the process and connected to a chimney (27) that takes all the vapours out.

Now that the nature of this invention and the optimal way to manufacture it have been sufficiently described, it only remains to be said that such description is not restrictive, and it is possible to introduce changes, as long as they do not affect the essential characteristics claimed hereunder.

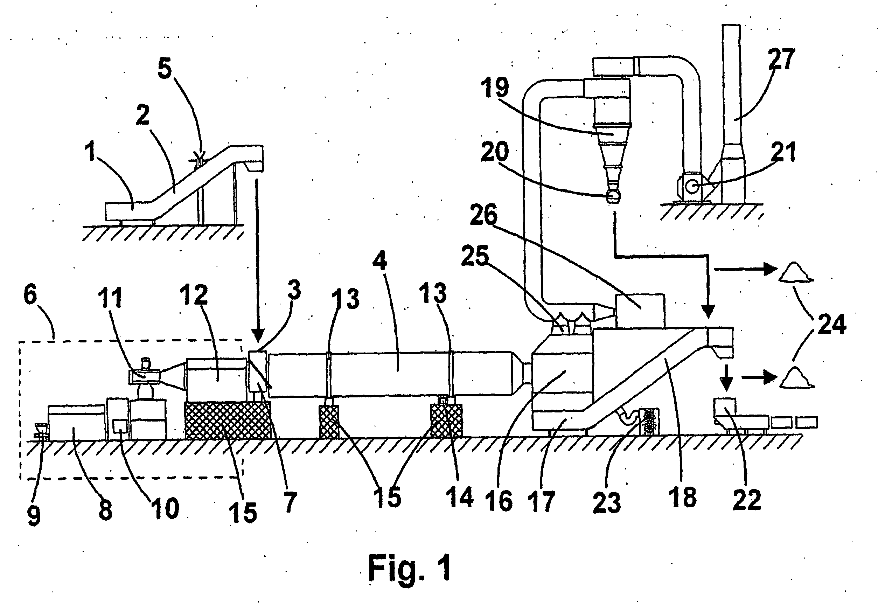

## Claims

1. Improved dehydration system comprising a revolving screen, of the type used to dehydrate or dry different types of agricultural products, comprising a perfected multiturn revolving screen, and, at the exit of the screen, a sluice-free decantation unit (16), wherein the product falls by gravity so that the dry product is separated from the hot air, **characterized in that** it uses a mixed hot air generator (6) with two sequential heating stages (8) and (12).

2. Improved dehydration system comprising a revolving screen, as described in the previous claim, **characterized in that** it can use solid fuels in the preheating stage (8).

3. Improved dehydration system comprising a revolving screen, as described in the previous claim, **characterized in that** it uses two fans, (11) and (21), that improve the hot air flow inside the revolving screen (4) and through the whole dehydration system.

## Patentansprüche

1. Verbessertes Dehydrationssystem, weiches einen drehbaren Sieb aufweist von der Art, wie sie zum Dehydrieren oder zum Trocknen von verschiedenen Arten landwirtschaftlicher Produkte verwendet werden, welcher eine perfektionierte Wendel-Siebtrommel und eine klappenlose Abscheideeinheit (16) am Siebausgang aufweist, in die das Produkt durch die Schwerkraft fällt, so dass das trockene Produkt von der heißen Luft getrennt wird, **dadurch gekennzeichnet, dass** es einen Generator (6) für gemischte Heißluft mit zwei sequentiellen Heizstufen (8) und (12) verwendet.

2. Verbessertes Dehydrationssystem, weiches eine Siebtrommel aufweist, gemäss dem vorhergehenden Anspruch, **dadurch gekennzeichnet, dass** es in der Vorwärmstufe (8) feste Brennstoffe verwenden kann.

3. Verbessertes Dehydrationssystem, welches eine Siebtrommel aufweist, gemäss dem vorhergehenden Anspruch, **dadurch gekennzeichnet, dass** es zwei Ventilatoren (11) und (21) verwendet, die den Warmluftstrom innerhalb der Siebtrommel (4) und durch das gesamte Dehydrationssystem verbessern.

## Revendications

1. Système amélioré de déshydratation, comprenant un tamis rotatif de type employé pour déshydrater ou sécher différentes sortes de produits agricoles, composé d'un tamiseur perfectionné avec hélice et, à la sortie du tamis, d'une unité de décantation sans porte (16) dans laquelle le produit par gravité tombe de sorte que le produit sec est séparé de l'air chaud, **caractérisé par** l'utilisation d'un générateur (6) pour air chaud mixte (6) comprenant deux étapes séquentielles de chauffe (8) et (12).

2. Système amélioré de déshydratation comprenant un tamis rotatif tel que décrit dans la revendication précédente, **caractérisé par le fait que** durant l'étape de pré-chauffe. (8) les combustibles solides peuvent être utilisés.

3. Système amélioré de déshydratation comprenant un tamis rotatif tel que décrit dans la revendication précédente, **caractérisé par** l'utilisation de deux ventilateurs (11) et (21), qui augmentent le débit d'air chaud à l'intérieur du tamiseur (4) et dans tout le système de déshydratation.
